Europäisches Patentamt

European Patent Office

Office européen des brevets

(11) Publication number: **0 144 110**
**B1**

(12) **EUROPEAN PATENT SPECIFICATION**

(45) Date of publication of patent specification: **10.02.88**

(51) Int. Cl.⁴: **F 16 L 17/00, F 16 L 23/00, F 16 L 39/04, F 16 J 15/40**

(21) Application number: **84201753.5**

(22) Date of filing: **29.11.84**

(54) **Conduit coupling.**

(30) Priority: **01.12.83 NL 8304117**

(43) Date of publication of application:
**12.06.85 Bulletin 85/24**

(45) Publication of the grant of the patent:
**10.02.88 Bulletin 88/06**

(84) Designated Contracting States:
**DE FR GB IT NL**

(56) References cited:
**CH-A- 448 647**
**CH-A- 499 052**
**DE-A-2 239 314**
**FR-A-2 418 405**
**GB-A-2 065 798**
**GB-A-2 124 720**

(73) Proprietor: **SINGLE BUOY MOORINGS INC.**
**5, Route de Fribourg P.O. Box 124**
**CH-1723 Marly (CH)**

(72) Inventor: **Adang, François Marie Jacques**
**Kleine Beemd 41**
**NL-5283 LP Boxtel (NL)**
Inventor: **Franken, Wouter Adriaan Gerardus**
**Quartier la Vallière**
**F-06320 La Turbie (FR)**

(74) Representative: **van der Beek, George Frans**
**et al**
**Nederlandsch Octrooibureau Johan de Wittlaan**
**15 P.O. Box 29720**
**NL-2502 LS 's-Gravenhage (NL)**

Courier Press, Leamington Spa, England.

## Description

The invention relates to a coupling of two conduit parts which are rotatable with respect to each other, which parts have surfaces movable with respect to each other and between which there exists a small clearance which is sealed by means of two sealing rings which are each placed inside a groove in one or the other surface of the mutually rotatable parts.

A coupling of this type is known from many publications such as published NL—A—7812499, FR—A—2,298,757 or US—A—3,698,433. In all said known couplings rings of flexible material are clamped between said parts. Rotatable conduit couplings such as, e.g. used in mooring devices, very often have to allow the passage of media having a relatively high pressure. If the medium is a gas under high pressure the known seals are not satisfactory and there is a large risk of leakage.

Purpose of the invention is to provide a coupling which gives an excellent sealing of the medium under high pressure with respect to the environment within which the conduit coupling functions.

According to the invention this purpose is achieved in that each groove contains two sealing rings and has a width which is larger than the width taken by the two sealing rings inside the groove and the space between the two sealing rings is connected to a source of liquid the pressure of which is larger than the pressure of the medium which has to be sealed, said sealing rings each having substantially U-shaped cross-section and being placed within the groove with the openings turned towards each other.

The seal according to the invention is based upon the principle that the medium of the channel that has to be sealed and which through one of the sealing rings in which space there is a higher liquid pressure meets said liquid of higher pressure, which liquid prevents the medium from entering as a result of its higher pressure and eventually higher viscosity. Said liquid, moreover, operates as a lubricant for the sealing rings.

The consideration holds true in this respect that it is not disadvantageous if a little bit of the liquid from the seal enters the medium guided by the conduit, but that on the contrary nothing of said medium may reach the environment.

Preferably the liquid in the groove of the seal has a larger viscosity than the medium to be sealed. This improves the sealing. By the U-shaped cross-section of the sealing rings placed inside the grooves such that they face each other with their openings the liquid will press the legs of said U-shaped sealing rings against the walls of the groove and against the surface to be sealed.

Another cross-sectional shape having lips engaging the surfaces to be sealed has the same effect.

It is observed that inflatable seals or seals which can be filled by means of a pump are known in many forms, e.g. from GB—A—257,688 or US—A—3,642,291. With all known inflatable seals the seal engages the surface to be sealed by means of a closed wall. A seal comprising an inflatable endless hose has, however, the disadvantage that if applied in sealing against a gas under high pressure a leakage once occurred remains until the pressure is blown off sufficiently, whereas this cannot happen with the seal according to the invention.

It is further observed that from DE—A—2239314 a sealing is known between two rigidly connected flanges, comprising two grooves each provided with a sealing ring and with a space between said grooves connected to a supply of fluid under a pressure which is higher than the pressure inside the channel which forms the passage through the interconnected flanges. This is not a seal between rotatable parts.

The invention now will be further elucidated with reference to the drawings.

Fig. 1 shows in cross-section one embodiment of the seal according to the invention.

Fig. 2 shows in cross-section a different location of the seal according to the invention.

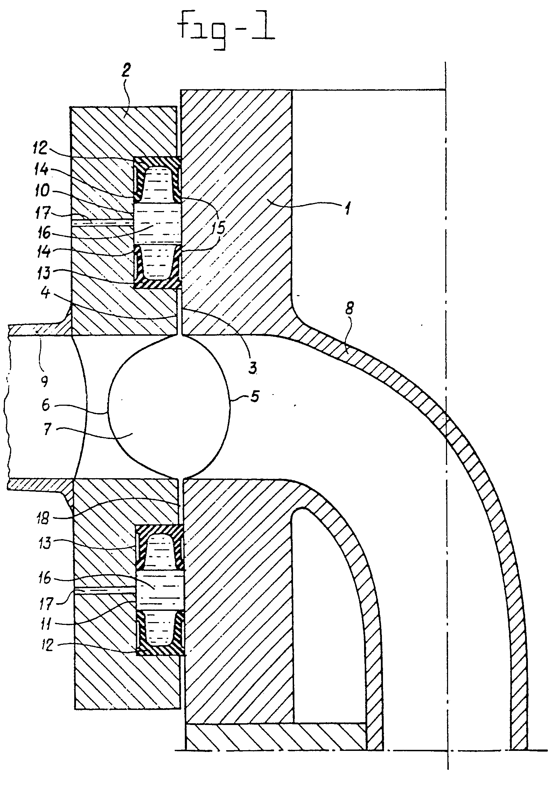

The conduit coupling shown in Fig. 1 comprises a stationary part 1 and a rotatable part 2. The parts 1 and 2 are supported upon each other by means of non-shown radial bearings. Both parts 1 and 2 are provided in the opposite cylindrical surfaces 3 and 4 respectively with circumferentially extending recesses 5 and 6 respectively which form a circumferentially extending channel 7. Part 1 has a conduit connection 8 extending through the center of the coupling and part 2 has a radially outwardly extending conduit connection 9.

At both sides of the conduit connection 8, 9 the rotatable part 2 has been provided with a groove 10 and 11 respectively or rectangular cross-section. In both grooves there are sealing rings 12 and 13 respectively of U-shaped cross-section, which with one leg 14 engage the inner wall of the rectangular groove and with the other leg 15, eventually extending a little bit outside the groove, lie against the outer cylindrical surface 3 of the stationary part 1. Said sealing rings 12, 13 form a closed chamber 16 with the wall 3 against which the outer ends 15 are in contact, which chamber is connected to a conduit 17 which is connected to a not-shown source of liquid under pressure. This liquid under pressure inside the chamber 16 presses the sealing rings 12 and 13 respectively at their place and with the outer ends 14 and 15 against the inner wall 10 and against the wall 3 respectively against which the sealing has to take place. Between the outer ends of the lips 15 this liquid, such as oil or water, is in contact with the outer surface 3 of part 1 against which sealing has to take place.

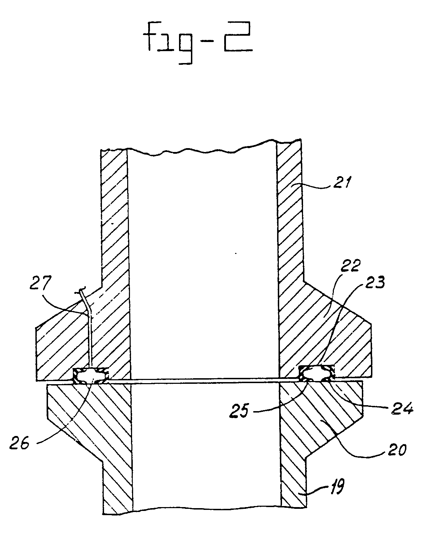

The embodiment shown in Fig. 2 comprises a stationary tube 19 having a flange 20 and a tube 21 with flange 22 rotatable with respect to said stationary tube. Flange 22 has been provided with a circumferentially extending groove 23 in which are provided two U-shaped sealing rings 24 and 25. The space 26 between the two sealing rings is filled with liquid under high pressure by means of conduits 27 connected to a source of pressure.

With the embodiment shown in Fig. 1 and 2 the sealing rings are mounted in the rotatable part. Said sealing rings, however, also can be mounted in the stationary part 1 or 19 respectively and it is possible as well to apply seals in which the sealing rings extend into a groove of the stationary part as well as into an opposite groove of the rotatable part.

### Claims

1. Coupling of two conduit parts (1, 2) which are rotatable with respect to each other, which parts have surfaces (3, 4) movable with respect to each other and between which there exists a small clearance (18) which is sealed by means of two sealing rings (12, 13) which are each placed inside a groove (10, 11) in one or the other surface of the mutually rotatable parts, characterized in, that each groove (10, 11) contains two sealing rings (12, 13) and has a width which is larger than the width taken by the two sealing rings (12, 13) inside the groove (10, 11) and the space (16) between the two sealing rings is connected to a source (17) of liquid the pressure of which is larger than the pressure of the medium which has to be sealed, said sealing rings (12, 13) each having a substantially U-shaped cross-section and being placed within the groove with the openings turned towards each other.

2. Coupling as claimed in claim 1, characterized in, that the liquid inside the groove has a viscosity, which is larger than the viscosity of the medium to be sealed.

3. Coupling as claimed in claim 1 or 2, characterized in, that the sealing rings (12, 13) are made from resilient material.

### Patentansprüche

1. Kupplung aus zwei Leitungsteilen (1, 2), die bezüglich zueinander drehbar sind, bezüglich zueinander bewegbare Flächen (3, 4) aufweisen und zwischen denen ein schmaler Spalt (18) vorhanden ist, der mittels zweier Dichtringe (12, 13) abgedichtet ist, die jeweils in das Innere einer Rille (10, 11) in der einen oder der anderen Fläche der gegenseitig drehbaren Teile eingesetzt sind, dadurch gekennzeichnet, daß jede Rille (10, 11) zwei Dichtringe (12, 13) enthält und eine Breite aufweist, die größer als die von den zwei Dichtringen (12, 13) innerhalb der Rille (10, 11) eingenommene Breite ist, und der Zwischenraum (16) zwischen den zwei Dichtringen an eine Quelle (17) einer Flüssigkeit angeschlossen ist, deren Druck größer als der Druck des abzudichtenden Mediums ist, wobei die genannten Dichtringe (12, 13) jeweils einen im wesentlichen U-förmigen Querschnitt aufweisen und mit den Öffnungen zueinander gewendet innerhalb der Rille angeordnet sind.

2. Kupplung nach Anspruch 1, dadurch gekennzeichnet, daß die Flüssigkeit innerhalb der Rille eine Viskosität aufweist, die höher als die Viskosität des abzudichtenden Mediums ist.

3. Kupplung nach Anspruch 1 oder 2, dadurch gekennzeichnet, daß die Dichtringe (12, 13) aus elastischem Material bestehen.

### Revendications

1. Un accouplement de deux parties de conduit (1, 2) qui sont susceptibles de tourner l'une par rapport à l'autre, dont les parties présentent des surfaces (3, 4) pouvant se déplacer l'une par rapport à l'autre et entre lesquelles il existe un faible jeu (18) qui est rendu étanche par l'intermédiaire de deux joints d'étanchéité toriques (12, 13) qui sont chacun disposé à l'intérieur d'un rainure (10, 11) dans l'une ou l'autre surfaces des parties susceptibles de tourner mutuellement, caractérisé en ce que, chaque rainure (10, 11) renferme deux joints d'étanchéité (12, 13) et présente une largeur qui est supérieure à la largeur prise par les deux joints toriques (12, 13) disposés à l'intérieur de la rainure (10, 11) et l'espace (16) entre les deux joints toriques est relié à une source (17) de liquide dont la pression est supérieure à la pression du milieu qui doit être rendu étanche, lesdits joints toriques (12, 13) ayant chacun une section transversale sensiblement en forme de U et étant disposés dans la rainure avec les ouvertures tournées l'une vers l'autre.

2. Un accouplement selon la revendication 1, caractérisé en ce que le liquide à l'intérieur de la rainure présente une viscosité qui est supérieure à la viscosité du milieu à rendre étanche.

3. Un accouplement selon la revendication 1 ou 2, caractérisé en ce que, les joints toriques (12, 13) sont réalisés à partir d'un matériau élastique.

fig-1

# fig-2